Europäisches Patentamt

(19) European Patent Office

Office européen des brevets

(11) Numéro de publication: **0 242 266**
**B1**

## (12) FASCICULE DE BREVET EUROPEEN

(45) Date de publication du fascicule du brevet:
**21.02.90**

(21) Numéro de dépôt: **87400753.7**

(22) Date de dépôt: **06.04.87**

(51) Int. Cl.⁴: **G01P 15/09**, G01P 1/02

(54) **Accéléromètre, notamment pour la détection du cliquetis d'un moteur à combustion interne.**

(30) Priorité: **14.04.86 FR 8605271**

(43) Date de publication de la demande:
**21.10.87 Bulletin 87/43**

(45) Mention de la délivrance du brevet:
**21.02.90 Bulletin 90/8**

(84) Etats contractants désignés:
**DE ES IT**

(56) Documents cités:
**FR-A- 2 550 346**
**GB-A- 1 561 110**
**US-A- 3 506 857**
**US-A- 4 302 964**
**US-A- 4 354 131**

**PATENT ABSTRACTS OF JAPAN,**
**vol. 7, no. 238 (P-231)[1383], 22nd October 1983 &**
**JP-A-58 124 958**

(73) Titulaire: **VALEO ELECTRONIQUE, 21-27, boulevard
Gambetta, F-92130 Issy-les-Moulineaux(FR)**

(72) Inventeur: **Ferry, Jaques, 204, rue de la Croix-Nivert,
F-75015 Paris(FR)**

(74) Mandataire: **Michardière, Bernard et al, C/O CABINET
PEUSCET 68, rue d'Hauteville, F-75010 Paris(FR)**

ACTORUM AG

## Description

L'invention est relative à un accéléromètre du genre de ceux qui comprennent, d'une part, un corps destiné à être fixé sur une pièce dont les accélérations ou les vibrations sont à détecter, d'autre part un élément piézo-électrique précontraint entre ce corps et une masse sismique, et d'autre part enfin des moyens de liaison électrique souples entre deux faces opposées de l'élément piézo-électrique et des bornes d'un connecteur monté sur le corps d'accéléromètre, des moyens d'isolation électrique étant en outre prévus entre les faces de l'élément piézo-électrique et les parties voisines de l'accéléromètre comme dans FR-A 2 550 346.

L'invention concerne plus particulièrement, parce que c'est dans ce cas que son application semble devoir présenter le plus d'intérêt , mais non exclusivement, un accéléromètre pour la détection du cliquetis d'un moteur à combustion interne.

Lors de l'utilisation de tels accéléromètres, on a constaté, dans les signaux électriques recueillis aux bornes du connecteur, des phénomènes parasites qui viennent gêner la lecture des signaux correspondant aux vibrations ou accélérations que l'on souhaite détecter.

L'invention a pour but, surtout, de fournir un accéléromètre du genre défini précédemment qui réponde mieux que jusqu'à présent aux diverses exigences de la pratique et qui, notamment, permettre de réduire de manière sensible les phénomènes parasites venant gêner la lecture des vibrations ou accélérations à détecter. Il est souhaitable également que la durée de vie et la fiabilité de l'accéléromètre soient améliorées.

Selon l'invention, un accéléromètre, notamment pour la détection du cliquetis d'un moteur à combustion interne, du genre défini précédemment, est caractérisé par le fait que le connecteur est monté sur le corps d'accéléromètre à l'aide de moyens d'amortissement propres à réduire ou supprimer la transmission mécanique des vibrations ou accélérations du corps d'accéléromètre au connecteur.

Les moyens d'amortissement peuvent constituer également des moyens d'étanchéité entre le connecteur et le corps d'accéléromètre.

Avantageusement, les moyens d'amortissement peuvent comprendre un élément en matière élastomère ou équivalent. Cet élément comporte, de préférence, une partie annulaire disposée entre deux faces transversales, voisines l'une de l'autre, appartenant respectivement au corps d'accélérateur et au connecteur.

Selon une réalisation avantageuse, le corps d'accéléromètre comporte une enveloppe ou des bras extérieurs, s'étendant parallèlement à l'axe de l'accéléromètre, destinés à recevoir, à l'intérieur, une jupe, en particulier cylindrique, constituant un prolongement du connecteur ; l'élément en matière élastomère ou équivalent, constituant les moyens d'amortissement, comprend alors un manchon disposé entre la jupe et l'enveloppe ou les bras , ce manchon étant muni, à son extrémité située à l'intérieur de la jupe, de la susdite partie annulaire.

Le corps d'accéléromètre peut avoir un contour polygonal tandis que la jupe du connecteur a une forme cylindrique ; le manchon en matière élastomère, ou équivalent, peut alors présenter, sur sa surface extérieure, des bourrelets en saillie radiale vers l'extérieur, ces bourrelets étant propres à venir s'inscrire dans les zones intérieures des angles du contour du corps d'accéléromètre.

Avantageusement, le corps peut comporter des languettes propres à être rabattues dans des évidements du manchon, notamment pour assurer un blocage en rotation. Dans le cas d'un corps à contour polygonal, ces languettes peuvent être prévues au niveau des sommets du polygone.

De préférence, les moyens de liaison électrique souples sont agencés pour établir un effet d'amortissement. Chaque moyen de liaison électrique peut comprendre un bloc en matière élastomère, ou équivalent, conducteur de l'électricité, notamment grâce à une charge en une matière appropriée, ce bloc présentant deux faces opposées contre lesquelles appuient des contacts, en particulier de forme effilée, reliés respectivement à une face de l'élément piézo-électrique et à une des broches du connecteur.

A la place d'un bloc de matière élastomère, ou équivalent, on peut prévoir un réceptacle, dans l'une des pièces constituée par le connecteur ou le corps d'accéléromètre, et un remplissage de ce réceptacle par un gel chargé de billes de verre métallisées, ou matière équivalente, pour établir la liaison électrique entre les susdits contacts.

Selon une autre possibilité, le bloc de matière élastomère, ou équivalent, appartenant aux moyens de liaison électrique, est agencé pour travailler en traction entre les susdits contacts.

L'invention consiste, mises à part les dispositions exposées ci-dessus, en un certain nombre d'autres dispositions dont il sera plus explicitement question ci-après à propos d'un mode de réalisation particulier décrit avec référence au dessin ci-annexé, mais qui n'est nullement limitatif.

La figure 1, de ce dessin, est une demi-coupe axiale suivant la ligne I-I, figure 2, d'un accéléromètre conforme à l'invention.

La figure 2, enfin, est une vue de dessus par rapport à la figure 1, avec parties coupées suivant la ligne II-II, figure 1.

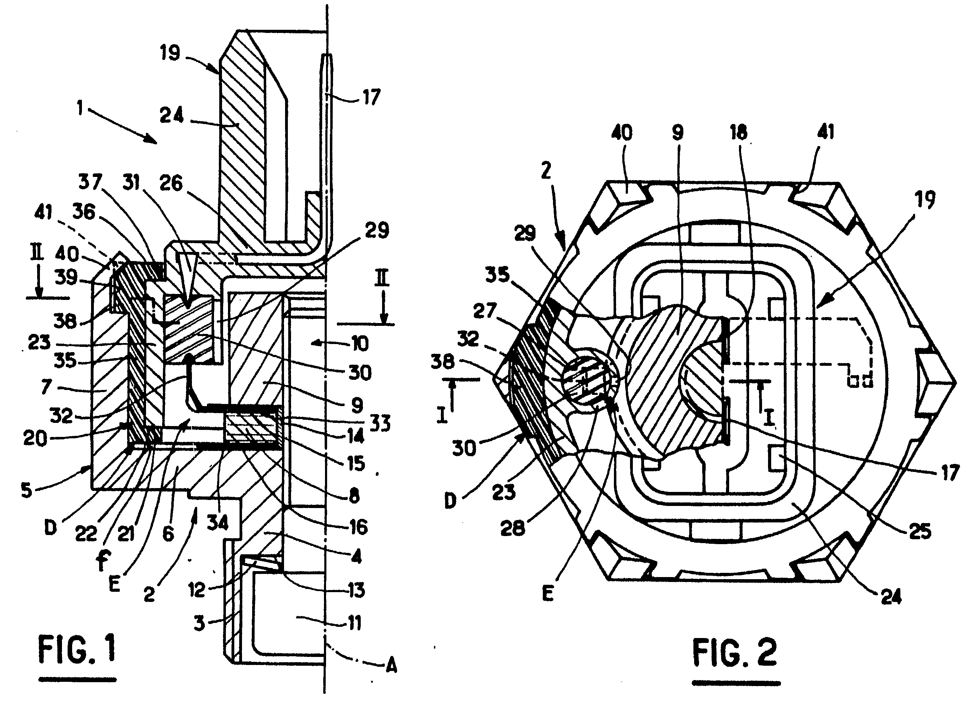

En se reportant au dessin, notamment à la figure 1, on peut voir un accéléromètre 1 plus particulièrement destiné à la détection du cliquetis d'un moteur à combustion interne, qui comprend un corps 2 destiné à être fixé sur une pièce dont les accélérations ou les vibrations sont à détecter. Ce corps 2 comporte, à sa partie inférieure, un manchon 3 fileté extérieurement pour la fixation dans un trou taraudé de la pièce en question. Le manchon 3 est relié par un col cylindrique 4, de plus faible diamètre, à une sorte de coupelle 5 s'ouvrant du côté opposé au manchon 3. La coupelle 5 comporte un fond transversal 6, à contour hexagonal (voir figure 2) dans l'exemple considéré, et des bras 7, solidaires du fond 6 et s'étendant, parallèlement à l'axe A d'accéléromètre, orthogonalement au plan moyen du fond 6, et dans la zone des sommets du contour polygonal de ce fond.

L'accéléromètre 1 comprend un élément piézoélec-trique 8 de forme annulaire, précontraint entre le fond transversal 6 du corps 2 et une masse sismique 9. Cette masse 9 peut être agencée sous la forme d'une bague annulaire comportant un alésage taraudé propre à coopérer avec l'extrémité filetée d'une vis 10 dont la tige traverse le passage limité par le col 4 et l'élément piézo-électrique 8. La tête 11 de la vis 10 est logée dans l'espace interne du manchon 3. Une rondelle métallique élastique 12 est comprimée d'une part entre l'épaulement formé par le décrochement entre la tête 11 et la tige de la vis 10 et, d'autre part, l'épaulement 13 prévu transversalement dans le fond du volume intérieur du manchon 3. Une bague isolante 14 est logée à l'intérieur de l'ouverture de l'élément piézo-électrique 8 et entoure la tige de la vis 10.

Des moyens de liaison électrique souples E sont prévus entre les deux faces opposées 15, 16, de l'élément piézo-électrique 8 et les bornes, formées par des broches 17, 18, d'un connecteur 19 monté sur le corps 2 d'accéléromètre.

Le connecteur 19 est monté sur le corps 2 à l'aide de moyens d'amortissement D propres à réduire ou supprimer la transmission mécanique des vibrations ou accélérations du corps 2 au connecteur 19. Avantageusement, les moyens d'amortissement D constituent également des moyens d'étanchéité entre le connecteur et le corps d'accéléromètre.

Ces moyens d'amortissement D comprennent un élément 20 en matière élastomère, ou équivalent, qui comporte une partie annulaire 21 disposée entre deux faces transversales voisines l'une de l'autre et formées respectivement par la face transversale intérieure du fond 6 du corps d'accélérateur, et la face transversale d'extrémité 22 d'une jupe cylindrique 23 constituant un prolongement du connecteur 19. Ce connecteur comporte une sorte de douille 24 à contour sensiblement rectangulaire comme visible sur la figure 2, dont les parois sont parallèles à l'axe A, cette douille s'ouvrant du côté opposé au manchon fileté 3. Les parois de la douille 24 entourent et protègent les broches 17 et 18. La douille 24 est propre à recevoir une fiche mâle (non représentée) de connecteur. Des nervures de guidage 25 sont prévues, parallèlement à l'axe A, sur la surface intérieure de la douille 24 pour coopérer avec des rainures correspondantes prévues sur la susdite fiche mâle. La douille 24 comporte un fond transversal 26 qui déborde extérieurement au-delà du contour de cette douille pour assurer la transition avec la jupe cylindrique 23.

Ce fond 26 est muni, du côté tourné vers le fond 6 du corps 2, de deux logements tels que 27 (figure 2) diamétralement opposés, de forme cylindrique, et s'ouvrant, suivant la direction axiale, du côté du fond 6. Les parois 28, limitant ces logements 27, font saillie radialement vers l'intérieur par rapport à la surface interne de la jupe 23, et viennent s'inscrire dans l'espace annulaire situé entre la surface extérieure de la masse 9 et la surface intérieure cylindrique de la jupe 23. Les parois 28, à section en arc de cercle, délimitant un même logement 27,sont séparées par une fente 29 (figure 2) parallèle à l'axe A et dont la ligne moyenne est située de le plan passant par cet axe A et l'axe du logement 27.

Les moyens de liaison électrique E comprennent un bloc 30 conducteur de matière élastomère, ou équivalent,disposé dans chaque logement 27 ; un bloc 30 est associé à chaque face 15 , 16 de l'élément 18. La matière du bloc élastique 30 peut être rendue conductrice par une charge appropriée, notamment par une charge de billes métalliques. Au lieu d'un bloc de matière élastomère, on pourrait utiliser un bloc de silicone chargé de paillettes métalliques, ou un gel conducteur, par exemple chargé de billes de verre métallisées au -quel cas le logement 27 pourrait être fermé du côté tourné vers le fond 6. Chaque bloc 30 comporte deux faces opposées contre lesquelles viennent appuyer des contacts ou cosses 31, 32, métalliques, notamment de forme effilée se terminant par une pointe qui s'enfonce dans la matière du bloc 30. Le contact 31 est relié par une lamelle conductrice, noyée dans la matière du connecteur 19, à l'une des broches de ce connecteur, par exemple la broche 17 dans le cas du contact 31 visible sur la figure 1. Le contact 32 peut être formé par une extension radiale d'une rondelle métallique 33, ladite extension étant repliée sensiblement à angle droit par rapport au plan de la rondelle. Cette rondelle métallique 33 est en contact électrique avec la face 15 de l'élément piézo-électrique 8. L'autre face 16 de cet élément 8 est en contact électrique avec une autre rondelle 34 qui est reliée,électriquement, à un contact similaire au contact 32 de la figure 1, mais diamétralement opposé. Le contact similaire au contact 31 de la figure 1, mais diamétralement opposé, assure la liaison électrique entre ladite face 16 et l'autre broche 18 du connecteur.

Des moyens d'isolation électrique tels que vernis isolant ou analogue, sont prévus pour isoler électriquement les divers contacts, rondelles etc... et faces 15, 16 de l'élément piézo-électrique 8 par rapport aux autres pièces de l'accéléromètre.

L'élément 20 en matière élastomère, appartenant aux moyens d'amortissement D, est avantageusement formé par un manchon cylindrique 35 entourant la jupe 23 et muni, à son extrémité axiale tournée vers le fond 6, de la partie annulaire 21 qui constitue une sorte de rondelle transversale, destinée à constituer une butée axiale. Un jeu axial f (Fig. 1) est prévu entre la face transversale externe de la partie 21 et la face transversale en regard du fond 6.

A son autre extrémité, le manchon 35 est également muni d'une partie annulaire 36 faisant saillie radialement vers l'intérieur et reçue dans un évidement 37 périphérique prévu sur la surface extérieure du connecteur 19.

Au niveau des sommets du contour polygonal de la coupelle 5, le manchon 35 comporte, du côté de son extrémité 36, des bourrelets 38 en saillie radiale vers l'extérieur, propres à venir s'inscrire dans des longements tels que 39 (figure 1) prévus dans les zones intérieures des angles du contour de la coupelle 5, aux sommets des bras 7 éloignés du fond 6.

L'extrémité des bras 7 est agencée sous la forme de languettes 40 propres à être rabattues contre la face extérieure des bourrelets 38 pour assurer le maintien du manchon 35. De préférence, chaque bourrelet comporte, sur sa surface extérieure, un évidement 41 propre à recevoir la languette rabattue 40, ce qui permet d'assurer un autoblocage en rotation du connecteur 19 par rapport au corps 2.

L'assemblage et le montage de l'accéléromètre résultent immédiatement des explications précédentes.

Il est à noter que le corps 2 peut être constitué par une coupelle ayant une paroi extérieure continue formant une enveloppe, à la place des bras 7 décrits précédemment.

Les moyens d'amortissement D et les moyens de liaison électrique souples E décrits précédemment permettent de séparer au mieux la fonction de génération du signal, produite au niveau de l'élément piezo-électrique 8, de la fonction de connexion extérieure.

Le connecteur 19 est monté, en quelque sorte, comme un piston dans le corps 2 d'accéléromètre, la partie annulaire 21 et le manchon 35 en matière élastomère constituant un segment faisant office d'amortisseur. On pourrait aussi bien utiliser un ou plusieurs joints toriques.

La liaison électrique assurée à l'aide des blocs 30 en matière élastomère ou équivalent contribue à garantir l'effet amortisseur recherché dans l'assemblage.

Un tel montage permet, en particulier, d'éviter une résonance de l'ensemble dans une plage de fréquences pouvant aller de 1 Khz à 20 Khz.

De nombreuses variantes sont possibles, par rapport à la description du mode de réalisation des figures 1 et 2, tout en restant dans le cadre de l'invention comme revendiquée.

Le bloc de matière élastomère 30, intervenant dans les moyens de liaison électrique souples, au lieu de travailler en compression entre les contacts ou cosses 31, 32 pourrait travailler en traction. Ce bloc comporterait, à ses extrémités, des têtes formées par des renflements, ces têtes étant destinées à être reçues dans des ouvertures prévues dans les cosses de raccordement, le bloc de matière élastomère étant tendu mécaniquement entre ces cosses.

Le connecteur 19, au lieu d'avoir une sortie dans le plan de l'axe A ou parallèle à ce plan, pourrait avoir une sortie suivant une direction différente, notamment une direction à angle droit par rapport à l'axe A.

L'effet d'amortissement entre le corps d'accéléromètre et le connecteur, obtenu dans un accéléromètre conforme à l'invention, permet de réduire sensiblement les phénomènes parasites dans les signaux recueillis. Cet amortissement contribue également à accroître la durée de vie de l'accéléromètre, la précision et la fiabilité des mesures se maintenant bien dans le temps.

On peut considérer, en quelque sorte, que les moyens d'amortissement D comprennent des moyens d'amortissement axial formés par la partie annulaire 21 et le cas échéant la partie annulaire 37, ainsi que des moyens d'amortissement radial, formés par le manchon 35. Ces moyens d'amortissement axial et radial pourraient être séparés les uns des autres ; bien qu'ils soient utilisés de préférence simultanément, il serait possible d'utiliser seulement un amortissement axial ou un amortissement radial, selon le cas. Il est à noter également que les moyens d'amortissement pourraient être prévus entre des surfaces obliques par rapport à l'axe A, auquel cas un même moyen d'amortissement aurait des effets simultanés axiaux et radiaux.

**Revendications**

1. Accéléromètre, notamment pour la détection du cliquetis d'un moteur à combustion interne, comprenant, d'une part, un corps destiné à être fixé sur une pièce dont les accélérations ou les vibrations sont à détecter, d'autre part un élément piézo-électrique précontraint entre ce corps et une masse sismique, et d'autre part enfin des moyens de liaison électrique souples entre deux faces opposées de l'élément piézo-électrique et des bornes d'un connecteur monté sur le corps d'accéléromètre, des moyens d'isolation électrique étant en outre prévus entre les faces de l'élément piézo-électrique et les parties voisines de l'accéléromètre, caractérisé par le fait que le connecteur (19) est monté sur le corps (2) d'accéléromètre à l'aide de moyens d'amortissement (D) propres à réduire ou supprimer la transmission mécanique des vibrations ou accélérations du corps d'accéléromètre (2) au connecteur (19).

2. Accéléromètre selon la revendication 1 caractérisé par le fait que les moyens d'amortissement (D) constituent également des moyens d'étanchéité entre le connecteur (19) et le corps (2) d'accéléromètre.

3. Accéléromètre selon la revendication 1 ou 2 caractérisé par le fait que les moyens d'amortissement (D) comprennent un élément (20) en matière élastomère ou équivalent.

4. Accéléromètre selon la revendication 3 caractérisé par le fait que l'élément (20) en matière élastomère ou équivalent comporte une partie annulaire (21) disposée entre deux faces transversales (6, 22), voisines l'une de l'autre, appartenant respectivement au corps (2) d'accéléromètre et au connecteur (19).

5. Accéléromètre selon la revendication 3 ou 4 caractérisé par le fait que le corps (2) d'accéléromètre comporte une enveloppe ou des bras (7) extérieurs s'étendant parallèlement à l'axe (A) de l'accéléromètre, destinés à recevoir, à l'intérieur, une jupe (23), en particulier cylindrique, constituant un prolongement du connecteur, l'élément en matière élastomère (20) ou équivalent comprenant un manchon (35) disposé entre la jupe (23) et l'enveloppe ou les bras (7), ce manchon (35) étant muni, à son extrémité située à l'intérieur du corps (2) de la susdite partie annulaire (21).

6. Accéléromètre selon l'une quelconque des revendications 3 à 5 caractérisé par le fait que le corps (2) d'accéléromètre a un contour polygonal tandis que la jupe (23) du connecteur a une forme cylindrique, le manchon (35) en matière élastomère, ou équivalent présentant sur sa surface extérieure des bourrelets (38) en saillie radiale vers l'extérieur, ces bourrelets étant propres à venir s'inscrire dans les zones intérieures des angles du contour du corps (2) d'accéléromètre.

7. Accéléromètre selon l'une quelconque des revendications 3 à 6 caractérisé par le fait que le corps (2) comporte des languettes (40) propres à être rabattues dans des évidements (41) du manchon (35), notamment pour assurer un blocage en rotation.

8. Accéléromètre selon l'ensemble des revendications 6 et 7 caractérisé par le fait que les languettes (40) sont prévues au niveau des sommets du polygone constituant le contour du corps (2) d'accéléromètre.

9. Accéléromètre selon l'une quelconque des revendications précédentes caractérisé par le fait que les moyens de liaison électrique souples (E) sont agencés pour établir un effet d'amortissement.

10. Accéléromètre selon la revendication 9 caractérisé par le fait que chaque moyen de liaison électrique comprend un bloc (30) en matière élastomère, ou équivalent, conducteur de l'électricité, notamment grâce à une charge en matière appropriée, ce bloc (30) présentant deux faces opposées contre lesquelles appuient des contacts (32, 31) reliés respectivement à une face de l'élément piézo-électrique (8) et à une des broches (17, 18) du connecteur.

11. Accéléromètre selon la revendication 10 caractérisé par le fiat que le connecteur (19) comporte un fond (26) muni, du côté tourné vers le fond (6) du corps (2), de deux logements (27) de forme cylindrique, dont les parois (28) font saillie radialement vers l'intérieur par rapport à la surface interne de la jupe (23) du connecteur et viennent s'inscrire dans l'espace annulaire situé entre la surface extérieure de la masse sismique (9) et la surface intérieure cylindrique de la jupe (23), un bloc (30) conducteur de matière élastomère, ou équivalent, étant disposé dans chaque logement.

12. Accéléromètre selon l'une quelconque des revendications précédentes caractérisé par le fait que les moyens d'amortissement (D) entre le corps (2) et le connecteur (19) comprennent des moyens d'amortissement axial (21, 37).

13. Accéléromètre selon l'une quelconque des revendications précédentes caractérisé par le fait que les moyens d'amortissement (D) comprennent des moyens d'amortissement radial (35).

**Claims**

1. Accelerometer, viz. for the detection of the pinking of an internal combustion motor, comprising, on the one hand, a body to be fixed onto a part, the accelerations or vibrations of which are to be detected, on the other hand a prestressed piezoelectric element between that body and a seismic mass and, on the other hand, finally, flexible electric linking means between two opposite faces of the piezoelectric element and the terminals of a connector mounted onto the accelerometer body, electric insulating means being furthermore provided between the faces of the piezoelectric element and the next parts of the accelerometer, characterized in that the connector (19) is mounted onto the accelerometer body (2) by means of appropriated damping means (D) in order to reduce or suppress the mechanical transfer of vibrations or accelerations of the accelerometer body (2) to the connector (19).

2. Accelerometer according to claim 1, characterized in that the damping means (D) are also means for tightening between the connector (19) and the accelerometer body (2).

3. Accelerometer according to claim 1 or 2, characterized in that the damping means (D) comprise an element (20) made of an elastomere or equivalent material.

4. Accelerometer according to claim 3, characterized in that the element (20) made of an elastomere or equivalent material comprises a ring-shaped part (21) located between two traverse faces (6, 22) next to each other which belong to the accelerometer body (2) and the connector (19), respectively.

5. Accelerometer according to claim 3 or 4, characterized in that the accelerometer body (2) comprises a cover or external arms (7) which extend parallel to the axis (A) of the accelerometer, to be provided inside with a skirt (23), in particular cylindrical, which forms an extension of the connector, the element (20) made of an elastomere or equivalent material comprising a sleeve (35) located between the skirt (23) and the cover or the arms (7), this sleeve (35) being provided, at its end inside the body (2), with the above-mentioned ring-shaped part (21).

6. Accelerometer according to anyone of claims 3 to 5, characterized in that the accelerometer body (2) has a polygonal outline whereas the skirt (23) of the connector has a cylindrical shape, the sleeve (35) made of an elastomere or equivalent material having, on its outer surface, rims (38) which radially protrude towards the outside, these rims being appropriate to be inscribed into the inner areas of the angles of the periphery of the accelerator body (2).

7. Accelerometer according to anyone of claims 3 to 6, characterized in that the body (2) has tabs (40) which can be folded into recesses (41) of the sleeve (35), viz. to provide a blocking in rotation.

8. Accelerometer according to claims 6 and 7, characterized in that the tabs (40) are provided at the level of the apices of the polygone which forms the periphery of the accelerometer body (2).

9. Accelerometer according to anyone of the preceding claims, characterized in that the flexible electric linking means (E) are arranged to establish a damping effect.

10. Accelerometer according to claim 9, characterized in that each electric linking means comprise a block (30) made of an elastomere or equivalent material which is electricity-conducting, viz. thanks to a load made of an appropriate material, this block (30) having two opposite faces against which rest contacts (32, 31) connected to one face of the piezoelectric element (8) and to one of the lugs (17, 18) of the connector.

11. Accelerometer according to claim 10, characterized in that connector (19) comprises a bottom (26) provided, at the side oriented towards the bottom (6) of the body (2), with two cylinder-shaped housings (27), the walls (28) of which radially protrude towards inside with respect to the inner surface of the skirt (23) of the connector and are inscribed into the ring-shaped room between the outer surface of the seismic mass (9) and the cylindrical inner surface of the skirt (23), a conducting block (30) made of an elastomere or equivalent material being located in each housing.

12. Accelerometer according to anyone of the preceding claims, characterized in that the damping means (D) between the body (2) and the connector (19) comprise axial damping means (21, 37).

13. Accelerometer according to anyone of the preceding claims, characterized in that the damping means (D) comprise radial damping means (35).

## Patentansprüche

1. Beschleunigungsmesser, nämlich zum Messen des Klirrens eines Verbrennungsmotors, umfassend, einerseits, einen Körper zum Befestigen auf einen Teil, dessen Beschleunigungen oder Vibrationen zu messen sind, anderseits ein vorgespanntes piezoelektrisches Element zwischen diesem Körper und einer seismischen Masse und anderseits, schließlich, weiche elektrische Verbindungsmittel zwischen zwei gegenüberliegenden Seiten des piezoelektrischen Elements und Anschlußklemmen eines auf dem piezoelektrischen Element montierten Verbinders, wobei überdem elektrische Isolierungsmittel zwischen den Seiten des piezoelektrischen Elements und den anschließenden Teilen des Beschleunigungsmessers vorgesehen sind, dadurch gekennzeichnet, daß der Verbinder (19) mittels Dämpfungsmittel (D), welche dafür geeignet sind, die mechanische Übertragung der Vibrationen oder Beschleunigungen des Beschleunigungsmesskörpers (2) zum Verbinder (19) zu vermindern oder zu beseitigen, auf dem Beschleunigungsmesskörper (2) montiert sind.

2. Beschleunigungsmesser nach Anspruch 1, dadurch gekennzeichnet, daß die Dämpfungsmittel (D) ebenfalls Mittel zur Abdichtung zwischen dem Verbinder (19) und dem Beschleunigungsmesskörper (2) sind.

3. Beschleunigungsmesser nach Anspruch 1 oder 2, dadurch gekennzeichnet, daß die Dämpfungsmittel (D) ein Element (20) aus einem Elastomer- oder gleichwertigen Material umfassen.

4. Beschleunigungsmesser nach Anspruch 3, dadurch gekennzeichnet, daß das Element (20) aus einem Elastomer- oder gleichwertigen Material einen ringförmigen Teil (21) umfaßt, der zwischen zwei nebeneinanderliegenden Querflächen (6, 22), welche respektive dem Beschleunigungsmesskörper (2) und dem Verbinder (19) zugehören, angeordnet ist.

5. Beschleunigungsmesser nach Anspruch 3 oder 4, dadurch gekennzeichnet, daß der Beschleunigungsmesskörper (2) eine Umhüllung oder Außenarme (7) umfaßt, welche parallel zur Achse (A) des Beschleunigungsmessers angeordnet sind und dazu bestimmt sind, im Inneren einen, insbesondere zylindrischen, Mantel (23) aufzunehmen, welcher eine Verlängerung des Verbinder ist, wobei das Element (20) aus einem Elastomer- oder gleichwertigen Material eine zwischen dem Mantel (23) und der Umhüllung oder den Armen (7) angeordnete Muffe (35) umfaßt, wobei diese Muffe (35) an ihrem Körper (2) befindlichen Außenende mit dem o.e. ringförmigen Teil (21) versehen ist.

6. Beschleunigungsmesser nach irgendwelchem der Ansprüche 3 bis 5, dadurch gekennzeichnet, daß der Beschleunigungsmesskörper (2) einen polygonalen Umkreis hat, während der Mantel (23) des Verbinders eine zylindrische Form hat, wobei die Muffe (35) aus einem Elastomer- oder gleichwertigen Material an ihrer Außenfläche radial nach außen aussteckende Wülste (38) aufweist, wobei diese Wülste dafür geeignet sind, sich in die Innenzonen der Winkel des Umkreises des Beschleunigungsmesskörpers (2) einzuschreiben.

7. Beschleunigungsmesser nach irgendwelchem der Ansprüche 3 bis 6, dadurch gekennzeichnet, daß der Körper (2) Zapfen (40) umfaßt, welche dafür geeignet sind, in die Aussparungen (41) der Muffe (35) umgeklappt zu werden, nämlich um eine Verhinderung des Drehens zu gewährleisten.

8. Beschleunigungsmesser nach einem der Ansprüche 6 und 7, zusammen genommen, dadurch gekennzeichnet, daß die Zapfen (40) auf Höhe der Spitzen des Polygons, das den Umkreis des Beschleunigungsmesskörpers (2) bildet, vorgesehen sind.

9. Beschleunigungsmesser nach irgendwelchem der obigen Ansprüche, dadurch gekennzeichnet, daß die weichen elektrischen Verbindungsmittel (E) zur Bewirkung eines Dämpfungseffektes angeordnet sind.

10. Beschleunigungsmesser nach Anspruch 9, dadurch gekennzeichnet, daß jedes elektrische Verbindungsmittel einen Block (30) aus einem Elastomer- oder gleichwertigen Material umfaßt, der elektrizitätsleitfähig ist, nämlich dank einer Last aus einem geeigneten Material, wobei dieser Block (30) zwei gegenüberliegende Flächen aufweist, gegen deren Kontakte (32, 31) anliegen, welche respektive mit einer Seite des piezoelektrischen Elements (8) und einem Stift (17, 18) des Verbinders verbunden sind.

11. Beschleunigungsmesser nach Anspruch 10, dadurch gekennzeichnet, daß der Verbinder (19) einen Boden (26) umfaßt, der, an der nach dem Boden (6) des Körpers (2) zu gerichteten Seite, mit zylinderförmigen Räumen (27) versehen ist, deren Wände (28) gegenüber der Innenfläche des Mantels (23) des Verbinders radial nach innen aussteck en und sich im zwischen der Außenfläche der seismischen Masse (9) und der zylindrischen Innenfläche des Mantels (23) befindlichen ringförmigen Raum einschreiben, wobei ein leitfähiger Block (30) aus einem Elastomer oder gleichwertigem Material in jedem Raum angeordnet ist.

12. Beschleunigungsmesser nach irgendwelchem der obigen Ansprüche, dadurch gekennzeichnet, daß die Dämpfungsmittel (D) zwischen dem Körper (2) und dem Verbinder (19) axiale Dämpfungsmittel (21, 37) umfassen.

13. Beschleunigungsmesser nach irgendwelchem der obigen Ansprüche, dadurch gekennzeichnet, daß die Dämpfungsmittel (D) radiale Dämpfungsmittel (35) umfassen.

FIG. 1

FIG. 2

EP 0 242 266 B1